# EUROPEAN PATENT SPECIFICATION

(11) **EP 1 901 898 B1**
(45) Date of publication and mention of the grant of the patent: **20.08.2008**
(21) Application number: 06744398.6
(22) Date of filing: 17.05.2006
(51) Int. Cl.: B29B 17/00

(54) **PROCEDURE FOR PRODUCING INSULATING BUILDING UNITS FROM PLASTIC AND/OR RUBBER WASTE CONTAINING METAL**
VERFAHREN ZUR HERSTELLUNG ISOLIERTER BAUEINHEITEN AUS KUNSTSTOFF UND/ODER METALLHALTIGEN GUMMIABFÄLLEN
PROCÉDURE DE FABRICATION D'UNITÉS DE CONSTRUCTION ISOLANTES À PARTIR DE DÉCHETS DE PLASTIQUE ET/OU DE CAOUTCHOUC CONTENANT DU MÉTAL

(30) Priority: 18.05.2005 HU 0500505
(43) Date of publication of application: 26.03.2008
(73) Proprietor: Bera, Pál, 1221 Budapest (HU); Herczeg, Lászl, 1239 Budapest (HU)
(72) Inventor: Bera, Pál, 1221 Budapest (HU); Herczeg, Lászl, 1239 Budapest (HU)
(74) Representative: Ronaszéki, Tibor
(86) International application number: PCT/HU2006/000044
(87) International publication number: WO 2006/123195

(56) References cited:
- WO-A-03/057442
- FR-A- 2 738 177
- FR-A- 2 860 182
- US-A- 5 341 996
- US-A- 5 683 038

## Description

The invention relates to a procedure for the production of insulating building units from plastic and/or rubber waste containing metal, in the course of which procedure the plastic and/or rubber waste containing metal is ground, the ground material is mixed with binding and filling materials, then it is placed in a shaping mould, and a building unit is produced under pressure.

In the course of using public road vehicles the steel radial vehicle tyres wear out after some time. Worn-out tyres need to be replaced for reasons of life and property protection and accident prevention. Until recently useless tyres were mostly stored at waste disposal sites. Now the amount of used tyres accumulated has reached and even exceeded the reasonably manageable limit. For this reason several neutralisation procedures have been tested to recycle used tyres or use them for other purposes.

Patent specification No. HU P 99 04400 describes a procedure based on burning tyres and obtaining components suitable for further utilisation from the ashes created in the course of burning. However, the disadvantage of the procedure is that the construction of the equipment needed for using the procedure is rather expensive and - although heat released in the course of burning - it is also energy consuming.

Another disadvantage is that the metal waste remaining after burning the rubber component cannot be used without making further expensive and energy consuming interventions because of the contaminating components bonding to the metal components in the course of burning, so the problem of eliminating used tyres is not solved completely by this procedure.

Patent specifications No. HU P 93 02934 describes a solution in which tyres are gasified in a hermetically sealed place. However, this procedure requires rather complicated equipment in which a special lock gate structure is needed to enter the materials to be gasified and remove residues from the reaction space. Further utilisation of the remaining metal waste is rather difficult because of the contaminants, and the energy consumption of the procedure cannot be restricted to remain below the desired limit.

Document FR-A-2860 discloses a procedure for the production of ornamental dark using reclaimed tyres. Our aim with the invention was to eliminate the deficiencies of the known solutions and to create an alternative procedure facilitating the complete neutralisation of steel radial tyres using simple tools and beside favourable energy consumption in a way that the processed waste tyres become completely transformable and suitable for use as building units.

The invention was based on the recognition that in the course of our studies we found that from tyre pieces containing steel strands within the range of a maximum grain-size of 5-20 mm, using a binding material and exerting pressure, even without any external heat input, building unit shapes can be created in the case of which the size of the metal strands does not make the shapes unmanageably rigid, but due to the linking of the metal strands in a random network the shapes maintain an appropriate level of self-bearing capacity, which makes them suitable for wide-ranging use in building industry.

On the basis of the above study results the procedure according to the invention was based on the recognition that if using appropriate tools steel radial tyres are cut up in several stages into pieces within the determined suitable size range, then a material fraction with a lumpy granular structure can be created, from which, after moulding, building units suitable for use in the building industry can be produced in a way that the rubber and the steel components are completely recycled, that is neutralised together, without being separated, and by this the task can be solved.

In accordance with the set aim the procedure for the production of insulating building units from plastic and/or rubber waste containing metal - in the course of which the plastic and/or rubber waste containing metal is ground, the ground material is mixed with binding and filling materials, then it is placed in a shaping mould, and a building unit is produced under pressure - is based on the idea that steel radial tyres used as rubber waste containing metal is used, before grinding the used tyres are cut up into pieces of a maximum size of 10-30 cm, and they are ground only after being cut up previously, and after grinding the ground material containing metal is taken through separating equipment, where the assorted grains of a maximum size of 5-20 mm containing metal are separated from the rest of the ground material, and only the part of the ground material of the given grain size separated in this way is mixed with binding and filling materials.

A further feature of the procedure according to the invention may be that after grinding parts of the ground material exceeding the maximum size 20 mm are ground repeatedly, and the grains the size of which has been reduced below the maximum size of 20 mm in this way are also mixed with binding and filling materials.

In the case of a favourable version of the procedure polyester resin and/or water-based dispersion adhesive and/or epoxy resin and/or some other cross-linking adhesive is used as binding material.

In the case of a further version of the procedure moulding is performed at a pressure of 5-25 kPa, and in the course of moulding the mould is subjected to heat treatment at a temperature of 50-180 °C for a maximum of 3 minutes.

In the case of an even further realisation of the procedure in the ground material of the selected grain size the metal content is at least 20 mass percent, but maximum 50 mass percent.

From the aspect of the procedure it may be favourable to use a flat screen as separating equipment and to perform preliminary cutting up in a hydraulic bladed cutting machine and to perform grinding in a rotating bladed grinder.

The advantage of the procedure according to the invention is that the use of different tools known in themselves in a special order facilitates the complete recycling of steel radial tyres without separation in a way that as a result of recycling products are created that can be used again.

An advantage resulting from this is that the useful area occupied for storing used tyres can be reduced and even completely liberated after some time, after which the area can be used for other purposes, and by this the loading of the environment can be reduced significantly.

A further advantage is that with the procedure according to the invention the recycling of used steel radial tyres is solved by using exclusively mechanical energy, in a physical way, avoiding chemical reactions, as a result of which - as opposed to other procedures - no environmental pollution is realised by combustion products emitted in the course of burning.

Another advantage is that the procedure can be realised using simple equipment, without constructing any special facilities or developing tools, which reduces the specific investment costs of recycling. No special skills are needed for the realisation of the procedure, so it can be performed by a staff of average skills, due to which live labour costs can be kept at a low level.

It is also favourable that by using appropriately determined cutting and grinding stages energy consumption can be basically optimised, which may also reduce the production costs of the final product.

At economic level it must be taken into consideration that by realising our invention it becomes possible to produce heat, sound and vibration insulating building units from used steel radial tyres, which have been produced so far from expensive basic materials, beside further energy input. By eliminating these factors energy can be saved at the level of national economy, which improves energy balance.

A further advantage resulting from the procedure is that ground material below the bottom limit of the size range determined as suitable on the basis of the examinations can also be used as rail support or as aggregate in road foundations, so this part of ground tyres containing steel does not need to be regarded as waste demanding further storage areas either.

Below the invention is described in detail in connection with procedure examples.

### Example 1:

In the case of this version of the procedure building units with favourable sound and heat insulating properties suitable for use in making building foundations were produced from used steel radial tyres.

In the first phase of the procedure - in a way known in itself - collected used steel radial tyres were cut up in a hydraulic bladed cutting machine to pieces of a maximum size of 10-30 cm, then the previously cut tyre pieces containing steel strands were put in a rotating bladed grinder used as grinding equipment. In the rotating bladed grinder the pieces of a maximum size of 10-30 cm were ground in a way that the ground material was forwarded onto a double-stage flat screen.

In our case the flat screen consisted of an upper screen deck of a granular size of 20 mm and a lower screen deck of a granular size of 5 mm. The discharge opening of the screen deck of a granular size of 20 mm was connected with the input opening of the rotating bladed grinder in order to be able to reduce the size of the oversized grains of the ground material below 20 mm as desired by inserting a repeated grinding cycle. Below the lower screen deck of a granular size of 5 mm a collecting unit was placed for the purpose of collecting grains with a size below the maximum grain size of 5 mm for use as rail support in the course of another procedure not forming a subject of the present invention. In this way through the discharge opening between the two screen decks only the grains of ground steel radial tyres within the appropriate size range could leave the separating equipment.

In the following it could be determined that the metal content of the ground steel radial tyres was 25 mass percent. In the case of building units made for a given purpose the metal content can be influenced by determining the proportion of tyres worn to different extents. In the case of very worn tyres the metal content is higher, while in the case of slightly worn or only injured but relatively new tyres the metal content is lower. Then the grains of the rubber grinding containing metal were filled in a compulsory-type mixer and mixed with 40 mass percent of polyester resin as binding material and 5 mass percent of water-based dispersion adhesive, and after 8 minutes of mixing the still fluid and spreadable mixture was filled in metal moulds treated with a parting agent.

The mixture filled in moulds was placed in a hydraulic press and it was left to rest for 8 hours under a pressure of 20 kPa. Following hardening, the ready building units were removed from the moulds. The building units removed from the moulds were rectangular blocks containing air pockets, of a total efficiency of space filling of 85%, with heat, sound and vibration insulating properties, and their bending strength was above 1.2 N/mm².

### Example 2

In the case of this version of the procedure vibration absorbing plates to be built in the foundation of buildings were produced from used steel radial tyres. The rubber grinding was made in the same way as described above. The difference was that the metal content was set at 35 mass percent - by selecting used steel radial tyres worn to an appropriate extent - and it was mixed with 50 mass percent of epoxy resin as binding material and with 4 mass percent of cross-linking adhesive, then after 5 minutes of mixing the fluid mixture was filled in metal moulds treated with a parting agent.

In the following the mixture filled in moulds was placed in presser frames and compacted for 1 hour under a pressure of 25 kPa. In the course of compacting the moulds filled with the mixture were exposed to heat treatment at a temperature between 90-110 °C several times for 30-second periods not including the period of heating and cooling. The temperature of 90-110 °C is nuclear temperature, so the heating and cooling time depends on the thickness of the material. Heat treatment was applied to encourage faster setting.

Following hardening, the ready building units were removed from the moulds. As a result of the procedure we obtained vibration-absorbing plates with a compressive strength of 12 N/mm² and an efficiency of space filling of 88%.

The procedure according to the invention can be used favourably to recycle used steel radial tyres free from residual waste, and to produce heat, sound, fluid and vibration insulating units of different properties suitable for use in the building industry.

## Claims

1. Procedure for the production of insulating building units from plastic and/or rubber waste containing metal, in the course of which the plastic and/or rubber waste containing metal is ground, the ground material is mixed with binding and filling materials, then it is placed in a shaping mould, and a building unit is produced under pressure, **characterised by** that steel radial tyres used.as rubber waste containing metal is used, before grinding the used tyres are cut up into pieces of a maximum size of 10-30 cm, and they are ground only after being cut up previously, and after grinding the ground material containing metal is taken through separating equipment, where the assorted grains of a maximum size of 5-20 mm containing metal are separated from the rest of the ground material, and only the part of the ground material of the given grain size separated in this way is mixed with binding and filling materials.

2. Procedure as in claim 1, **characterised by** that after grinding parts of the ground material exceeding the maximum size 20 mm are ground repeatedly, and the grains the size of which has been reduced below the maximum size of 20 mm in this way are also mixed with binding and filling materials.

3. Procedure as in claim 1 or 2, **characterised by** that polyester resin and/or water-based dispersion adhesive and/or epoxy resin and/or some other cross-linking adhesive is used as binding material.

4. Procedure as in any of claims 1-3, **characterised by** that moulding is performed at a pressure of 5-25 kPa.

5. Procedure as in claim 4, **characterised by** that in the course of moulding the mould is subjected to heat treatment at a temperature of 50-180 °C for a maximum of 3 minutes.

6. Procedure as in any of claims 1-5, **characterised by** that in the ground material of the selected grain size the metal content is at least 20 mass percent, but maximum 50 mass percent.

7. Procedure as in any of claims 1-6, **characterised by** that a flat screen is used as separating equipment.

8. Procedure as in any of claims 1-7, **characterised by** that preliminary cutting up is performed in a hydraulic bladed cutting machine.

9. Procedure as in any of claims 1-8, **characterised by** that grinding is performed in a rotating bladed grinder.

## Patentansprüche

1. Verfahren für die Herstellung isolierender Baueinheiten aus metallhaltigen Kunststoff- und/oder Gummiabfällen, in dessen Verlauf die metallhaltigen Kunststoff- und/oder Gummiabfälle gemahlen werden, wobei das gemahlene Material mit Binde- und Füllmaterialien gemischt wird, wobei es dann in eine formgebende Form eingebracht wird, und wobei eine Baueinheit unter Druck hergestellt wird, **dadurch gekennzeichnet, dass** gebrauchte Stahlgürtelreifen für die metallhaltigen Gummiabfälle verwendet werden, dass die gebrauchten Reifen vor dem Mahlen in Stücke einer maximalen Größe von 10-30 cm zerschnitten werden, und dass sie erst gemahlen werden, nachdem sie zuvor zerschnitten wurden, und dass das metallhaltige gemahlene Material nach dem Mahlen durch eine Trennvorrichtung geführt wird, in der die metallhaltigen gemischten Körner mit einer maximalen Größe von 5-20 mm von dem Rest des gemahlenen Materials getrennt werden, wobei nur der Teil des auf diese Weise getrennten gemahlenen Materials der vorgegebenen Korngröße mit Binde- und Füllmaterialien gemischt wird.

2. Verfahren nach Anspruch 1, **dadurch gekennzeichnet, dass** nach dem Mahlen die Teile des gemahlenen Materials, die die maximale Größe von 20 mm übersteigen, wiederholt gemahlen werden, und dass die Körner, deren Größe auf diese Weise unter die maximale Größe von 20 mm verringert worden ist, ebenfalls mit Binde- und Füllmaterialien gemischt werden.

3. Verfahren nach Anspruch 1 oder 2, **dadurch gekennzeichnet, dass** Polyesterharz und/oder wasserbasierender Dispersionsklebstoff und/oder Epoxyharz und/oder irgendein anderer Vernetzungsklebstoff für das Bindematerial verwendet wird.

4. Verfahren nach einem der Ansprüche 1 bis 3, **dadurch gekennzeichnet, dass** die Formgebung bei einem Druck von 5-25 kPa durchgeführt wird.

5. Verfahren nach Anspruch 4, **dadurch gekennzeichnet, dass** im Laufe der Formgebung die Form für maximal 3 Minuten einer Wärmebehandlung bei einer Temperatur von 50-180°C unterzogen wird.

6. Verfahren nach einem der Ansprüche 1 bis 5, **dadurch gekennzeichnet, dass** der Metallgehalt in dem gemahlenen Material der ausgewählten Korngröße mindestens 20 Massen-Prozent beträgt, aber maximal 50 Massen-Prozent.

7. Verfahren nach einem der Ansprüche 1 bis 6, **dadurch gekennzeichnet, dass** ein flacher Filter als Trennvorrichtung verwendet wird.

8. Verfahren nach einem der Ansprüche 1 bis 7, **dadurch gekennzeichnet, dass** ein vorläufiges Zerschneiden in einer mit Schaufeln versehenen hydraulischen Schneidemaschine durchgeführt wird.

9. Verfahren nach einem der Ansprüche 1 bis 8, **dadurch gekennzeichnet, dass** das Mahlen in einer mit Schaufeln versehenen rotierenden Schleifmaschine durchgeführt wird.

## Revendications

1. Procédé pour la production d'unités de construction isolantes à partir de déchets de plastique et/ou de caoutchouc contenant du métal, au cours duquel les déchets de plastique et/ou de caoutchouc contenant du métal sont broyés, la matière broyée étant mélangée à des liants et des matières de charge, puis elle est placée dans un moule de façonnage, et l'on produit une unité de construction sous pression, **caractérisé en ce que** l'on utilise des pneus à carcasse radiale en acier comme déchets de caoutchouc contenant du métal, préalablement au broyage les pneus usagés sont découpés en morceaux d'une taille maximale de 10-30 cm, et ils sont broyés uniquement après avoir été découpés, et après le broyage, la matière broyée contenant du métal est amenée à travers des équipements de séparation, dans lesquels les grains assortis d'une taille maximale de 5-20 mm contenant du métal sont séparés du reste de la matière broyée, et seule la partie de matière broyée de la granulométrie donnée, séparée de cette manière, est mélangée aux matières de charge et aux liants.

2. Procédé selon la revendication 1, **caractérisé en ce que,** après broyage, les parties de la matière broyée dépassant la taille maximale de 20 mm sont broyées de façon réitérée, et les grains dont la taille a été réduite au-dessous de la taille maximale de 20 mm de cette manière, sont également mélangés aux matières de charge et aux liants.

3. Procédé selon la revendication 1 ou la revendication 2, **caractérisé en ce que** de la résine de polyester et/ou des matières adhésives en dispersion à base d'eau et/ou de la résine époxy et/ou d'autres matières adhésives de réticulation sont utilisées comme liant.

4. Procédé selon l'une quelconque des revendications 1-3, **caractérisé en ce que** le moulage est effectué à une pression de 5-25 kPa.

5. Procédé selon la revendication 4, **caractérisé en ce que**, au cours du moulage, le moule est soumis à un traitement thermique à une température de 50-180°C pendant un maximum de 3 minutes.

6. Procédé selon l'une quelconque des revendications 1-5, **caractérisé en ce que**, dans la matière broyée de la granulométrie choisie, la teneur en métal est d'au moins 20 % en masse, mais de 50% en masse maximum.

7. Procédé selon l'une quelconque des revendications 1-6, **caractérisé en ce qu'**un tamis plat comme équipement de séparation.

8. Procédé selon l'une quelconque des revendications 1-7, **caractérisé en ce que** la découpe préliminaire est effectuée dans une machine de coupe hydraulique à lames.

9. Procédé selon l'une quelconque des revendications 1-8, **caractérisé en ce que** le broyage est effectué dans un broyeur rotatif à lames.
